# EUROPEAN PATENT APPLICATION

(11) **EP 4 607 148 A1**
(43) Date of publication of application: **27.08.2025**
(21) Application number: 25158964.4
(22) Date of filing: 19.02.2025
(51) Int. Cl.: G01C 15/00

(54) **LASER SCANNING DEVICE, LASER SCAN DATA PROCESSING METHOD, AND PROGRAM**

(30) Priority: 22.02.2024 JP 2024025719
(71) Applicant: TOPCON CORPORATION, Tokyo 174-8580 (JP)
(72) Inventor: SASAKI, You, Tokyo, 174-8580 (JP); SUGIMOTO, Hiroaki, Tokyo, 174-8580 (JP)
(74) Representative: Schmitt-Nilson Schraud Waibel Wohlfrom Patentanwälte Partnerschaft mbB

(57) **Abstract**

Error in measurement is reduced in a laser scanning apparatus, the laser scanning apparatus 100 includes reflection mirror 105 rotating and being an optical system emitting laser scanning light; the horizontal rotating unit 103 being a housing holding the reflection mirror in a rotatable condition; and an error calculating unit calculating error of the laser scanning light in its optical axis direction, and in the laser scanning apparatus, the marking for optical axis correction 106 having a part arranged on the horizontal rotating unit 103, a certain part on which laser scanning is performed by the laser scanning light, the marking for optical axis correction 106 is a diagram in which size in a direction parallel to the laser scanning direction is not constant, and the error is calculated based on laser scan data of the diagram.

## Description

### Technical Field

The present invention relates to a technique for laser scanning.

### Background Art

A laser scanning apparatus is known in which laser ranging light is scanned linearly and dot by dot (See Patent Document 1).

The Patent Document 1: Japanese Unexamined Patent Application Publication No. 2023-150501

### Summary of the Invention

There are errors in measured values which vary after starting up a laser scanning apparatus. The errors tend to correlate with temperature inside the laser scanning apparatus. Therefore, the errors are thought to occur due to heat produced inside the laser scanning apparatus.

In practice, the above-mentioned errors are thought to occur due to complex interactions among deformations or distortions of a housing or kinds of members by temperature increase inside after powering ON, deformations or distortions of optical systems, changes in responsive properties of a sensor device such as an angle sensor, changes in operating time of an operating device and the like.

In view of the above circumstances, an object of the present invention is to provide a technique for reducing measurement errors in a laser scanning apparatus.

A first aspect of the present invention is a laser scanning apparatus that rotates, including an optical system emitting laser scanning light; a housing holding the optical system in a rotatable condition; and an error calculating unit calculating error of the laser scanning light in its optical axis direction, in which a diagram is arranged on the housing, a diagram onto which laser scanning is performed by the laser scanning light, the diagram has a shape of which size in a direction parallel to the laser scanning direction is not constant, and error is calculated based on laser scan data of the diagram.

In the present invention, another aspect can be mentioned in which in the calculation of the error, based on size of the diagram in the scanning direction obtained by laser scanning with respect to the diagram, error Δθx of the optical axis in a direction perpendicular to the scanning direction is calculated. In the present invention, another aspect can be mentioned in which in the calculation of the error, based on center position in the scanning direction of the scan data of the diagram, error Δθy of the optical axis in the scanning direction is calculated.

In the present invention, another aspect can be mentioned in which in the calculation of the error, if an error in the optical axis in a direction perpendicular to the scanning direction is defined as Δθx, and an error of the optical axis in the scanning direction is defined as Δθy, first scan data which is scan data of the diagram preliminarily obtained, and second scan data which is scan data of the diagram obtained during operation of the laser scanning apparatus, are compared, the Δθx is calculated based on variation in width in scanning direction of the first scan data and the second scan data, and the Δθy is calculated based on variation in a center position in the scanning direction of the first scan data and the second scan data.

In the present invention, another aspect can be mentioned in which the apparatus further comprises an optical axis direction correcting unit correcting information regarding the optical axis of the scanning light, based on the error.

In the present invention, another aspect can be mentioned in which the error calculating unit further calculates error in the optical axis direction of the laser scanning light based on the result of laser scanning with respect to multiple targets, of which the scanning direction is 180° different to each other in the horizontal direction.

A second aspect of the present invention is a processing method for laser scanning data for obtaining the error in the optical axis in a laser scanning apparatus, the laser scanning apparatus including: an optical system rotating and emitting laser scanning light; and a housing holding the optical system in a rotatable condition, in which a diagram is arranged on the housing, a diagram onto which laser scanning is performed by the laser scanning light, and the diagram has a shape of which the size in a direction parallel to the laser scanning direction is not constant, the method including: calculating the error based on laser scan data of the diagram.

A third aspect of the present invention is a program made to, when read and executed by a computer processor, cause the computer processor to perform processing laser scanning data for obtaining error in optical axis in a laser scanning apparatus, the laser scanning apparatus including: an optical system emitting laser scanning light and rotating; and a housing holding the optical system in a rotatable condition, in which a diagram is arranged on the housing, the diagram on which laser scanning is performed by the laser scanning light, and the diagram has a shape of which size in a direction parallel to the laser scanning direction is not constant, the program made to, when read and executed by a computer processor, cause the computer processor to calculate the error based on laser scan data of the diagram.

### Effect of the Invention

According to the present invention, occurrence of measurement error in a laser scanning apparatus can be reduced.

### Brief Description of Drawings

Fig. 1 is a diagram of the appearance of a laser scanning apparatus in which the present invention is employed.
Fig. 2 is a functional block diagram of a laser scanning apparatus in which the present invention is employed.
Fig. 3 is a functional block diagram of a laser scanning apparatus in which the present invention is employed.
Figs. 4A, 4B and 4C are conceptual diagrams regarding error in the optical axis of the scanning light.
Figs. 5A, 5B, and 5C are conceptual diagrams regarding error in optical axis of scanning light.
Figs. 6A, 6B, and 6C are conceptual diagrams showing the principal calculating errors in the optical axis of the scanning light.
Fig. 7 is a flowchart showing an embodiment of steps for processing.
Fig. 8 is another embodiment of markings for optical axis correction.
Fig. 9 is a conceptual diagram showing each component of angular error of the optical axis.
Fig. 10 is a conceptual diagram showing principal calculating angular errors of the optical axis by a normal-reverse observation.

### Embodiments of the Invention

### 1. First Embodiment

### (Laser scanning apparatus)

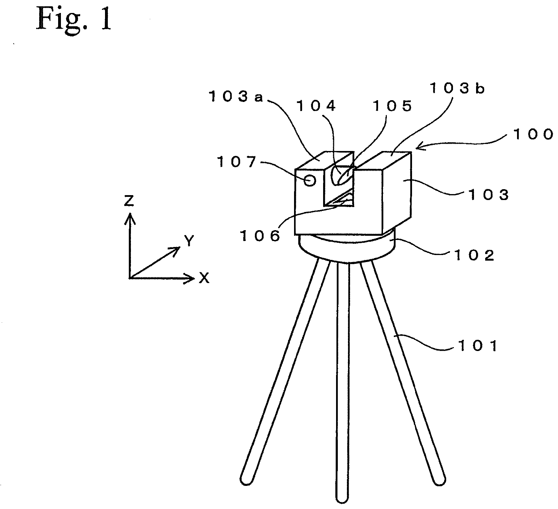

Fig. 1 shows a laser scanning apparatus 100 in which the present invention is used. The laser scanning apparatus 100 includes a tripod 101, a base unit 102, a horizontal rotating unit 103, and a vertical rotating unit 104. The base unit 102 is fixed to an upper part of the tripod 101. The laser scanning apparatus 101 is arranged on the ground or floor by the tripod 101. The horizontal rotating unit 103 is arranged on an upper part of the base unit 102 in a horizontally rotatable condition.

The horizontal rotating unit 103 rotates horizontally with respect to the base unit 102 by electric power. This horizontal rotation is performed around a vertical axis which is the rotational axis. It should be noted that the base unit 102 has an adjustment mechanism to maintain the horizon of the horizontal rotating unit 103 (the rotational axis is made to fit to the vertical axis); however, the figure and explanation are omitted since it is a conventional technique.

The horizontal rotating unit 103 includes the vertical rotating unit 104. The vertical rotating unit 104 includes a reflection mirror 105 on an oblique surface which is formed by cutting a circular cylindrical shape at 45° oblique surface. The vertical rotating unit 104 rotates by electric power around a circular cylindrical axis of the circular cylindrical shape (the central axis of the circular cylinder) as a rotational axis in a condition in which the circular cylindrical axis is maintained horizontal. This rotation is called vertical rotation. It should be noted that in an actual product, the reflection mirror 105 is not exposed, and it is instead covered with a cover including an optically transparent member arranged on the optical path.

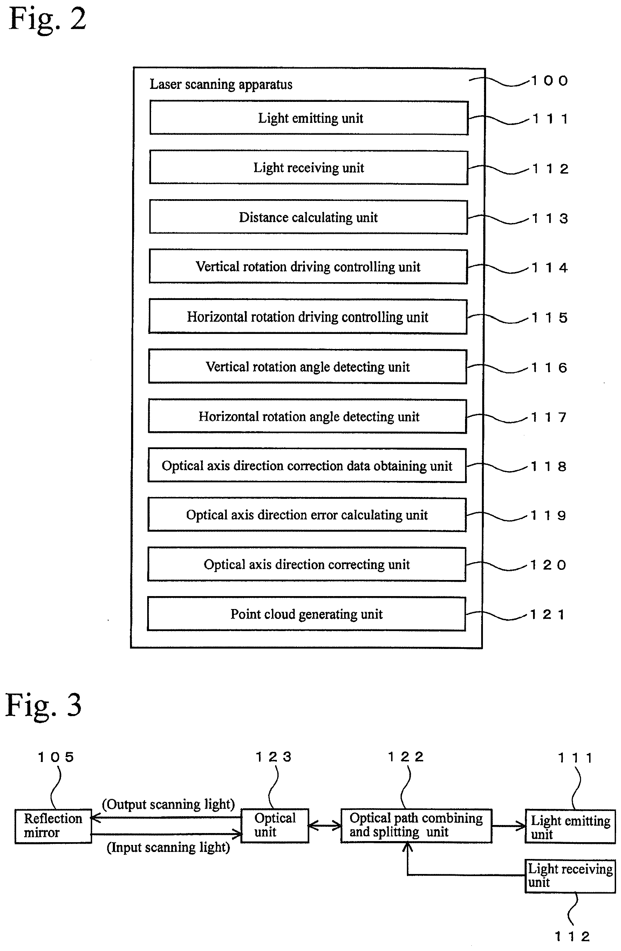

The horizontal rotating unit 103 has a two-headed structure which is concave if viewed from the front. The vertical rotating unit 104 is arranged at a part of a head unit 103a being one of the two-headed structures facing the other head part 103b in a vertically rotatable condition. On an extended line of the rotational axis of the vertical rotating unit 104 in the other head unit 103b of the two-headed structure, an optical unit (the reference numeral 123 in Fig. 3), which is not shown in Fig. 1, is arranged. Scanning light (ranging laser light) is emitted from this optical unit toward the reflection mirror 105. This emitted scanning light is reflected at the reflection mirror 105 and is emitted toward the outside. Scanning light which is reflected at a scanned object proceeds along a path opposite to the emitting light, returns to the reflection mirror 105, is reflected thereat, and is received at the optical unit.

By emitting scanning light from the optical unit by pulse light emission while vertically rotating the vertical rotating unit 104, laser scanning with respect to a direction perpendicular to the rotational axis of the vertical rotating unit 104 (laser scanning along a vertical plane) can be performed. Furthermore, at the same time, by horizontally rotating the horizontal rotating unit 103, laser scanning along the vertical plane progressively shifts in a horizontal direction, and laser scanning of all of the surroundings or of a certain range of a horizontal angle can be performed.

Scanning light is a beam of pulsed laser ranging light. Light emission frequency (scanning frequency) of scanning light is 1 kHz to 50 kHz for example. Scanning frequency, vertical rotation rate of the vertical rotating unit 104 and horizontal rotation rate of the horizontal rotating unit 103 are determined based on density of the scanning point required. The density of scanning point required is, for example, a density at which a gap between points is 1 cm to 5 cm at a distance of 50 m.

By performing the above-mentioned laser scanning, data of direction and distance from the laser scanning apparatus 100 to each scanning point (reflection point of scanning light) can be obtained regarding multiple points in the scanning range. According to this data, the position of each scanning point with respect to the laser scanning apparatus 100 is obvious. Aggregation of position data of each scanning point with respect to the scanning apparatus 100 forms point cloud data. If position and orientation of the laser scanning apparatus 100 in the absolute coordinate system is already known, the above-mentioned point cloud data can be described in an absolute coordinate system. The absolute coordinate system is a coordinate system which is used in maps or GNSS, and for example, its position is described by latitude, longitude, and altitude.

A marking for optical axis correction 106 is arranged on an upper surface of the horizontal rotating unit 103 which is a part beneath the reflection mirror 105. The marking for optical axis correction 106 is an optical surface which is arranged for the purpose of measuring the shape of the marking by laser scanning and which has a specific shape having a reflection ratio different from that of the circumference thereof. In this embodiment, as the marking for optical axis correction 106, a shaped pattern is employed, which has a reflection surface having a higher reflection ratio than the circumference thereof, but having a lower reflection ratio than a mirror. The reason is that the mirror reflects too much light. The marking for optical axis correction 106 reflects some scanning light as reference light. Reflection properties of the marking for optical axis correction 106 and the circumference thereof are determined in order to clearly distinguish reflection the ratio of the marking for optical axis correction 106 and that of the circumference. The reference light is used to correct errors in optical axis information of scanning light. This technique is explained below.

The marking for optical axis correction 106 is also used for adjustment of received light intensity of scanning light. For example, intensity of reflected light differs greatly between laser scanning of the topography of the ground or scanning a building, and laser scanning for a reflection prism (retroreflector). Therefore, if the latter laser scanning is performed under laser scanning conditions of the former laser scanning, a light receiving element may be saturated, and accurate position data of the reflection prism cannot be obtained. Therefore, in the latter laser scanning, an optical attenuator is inserted on an optical path inside the laser scanning apparatus 100 so as to reduce intensity of scanning light entering the light receiving element. Since the reference light is used to adjust the optical attenuator, scanning light reflected from the marking for optical axis correction 106 is used. Since details of this technique are out of the scope of the present invention, explanation is omitted.

A camera 107 is arranged on the horizontal rotating unit 103. The camera 107 is for taking stationary images and moving images of objects for laser scanning.

### (Block diagrams)

Fig. 2 is a functional block diagram of the laser scanning apparatus 100. Fig. 3 is a functional block diagram of an optical system of the laser scanning apparatus 100. As shown in Fig. 2, the laser scanning apparatus 100 includes a light emitting unit 111, light receiving unit 112, distance calculating unit 113, vertical rotation driving controlling unit 114, horizontal rotation driving controlling unit 115, vertical rotation angle detecting unit 116, horizontal rotation angle detecting unit 117, optical axis direction correction data obtaining unit 118, optical axis direction error calculating unit 119, optical axis direction correcting unit 120, and point cloud generating unit 121.

The distance calculating unit 113, vertical rotation driving controlling unit 114, horizontal rotation driving controlling unit 115, optical axis direction correction data obtaining unit 118, optical axis direction error calculating unit 119, optical axis direction correcting unit 120, and point cloud generating unit 121 are realized by a computer installed in the laser scanning apparatus 100. This computer includes a communication interface, a CPU, and a data storing device. In this data storing device, an action program to realize each functional unit, the action program being necessary to drive the laser scanning apparatus 100, and various types of data are stored. One, some, or all of the above-mentioned functional units can be constructed of special hardware.

The light emitting unit 111 includes a light emitting element emitting pulsed laser light, which is scanning light, a driving circuit for the light emitting element, and an optical system. The light receiving unit 112 includes an optical system receiving scanning light which is reflected by scanned objects, a light receiving element, and a circumferential circuit for the light receiving element.

As shown in Fig. 3, scanning light emitted from the light emitting unit 111 passes through an optical path combining and splitting unit 122 and is output from an optical unit 123 toward the reflection mirror 105 (Also see Fig. 1). Scanning light which is reflected by the scanned object proceeds along a path that is opposite to that of outgoing light, is reflected at the reflection mirror 105, is input into the optical unit 123, is split at the optical path combining and splitting unit 122 and is input into the light receiving unit 112. The light emitting unit 111, light receiving unit 112, and optical path combining and splitting unit 122 are arranged inside the other head unit 103a of the horizontal rotating unit 103.

The distance calculating unit 113 calculates a distance from the laser scanning apparatus 100 to a scanning point (reflection point of scanning light) by the principle of optical wave ranging. As an origin of the distance (origin point), for example, position of the light emitting element of the light emitting unit 111 is employed.

In this embodiment, a reference optical path, which is not shown in the figure and of which the optical path length is known, is arranged inside the laser scanning apparatus 100. Scanning light, which is emitted from the light emitting unit 111, passes through the above-mentioned reference optical path, which is not shown, as a reference light, in addition to passing through the path shown in Fig. 3, and enters into the light receiving unit 112. Both of the scanning light (ranging light) and the reference light are received at the light receiving unit 112; however, since travel distances thereof are differ from each other, the signal of the light receiving unit 112 that is output is two pulsed signals having a phase difference. Distance to the scanning point is calculated based on the phase difference of the two pulsed signals. The distance to the scanning point can also be calculated from the traveling time of the scanning light.

The vertical rotation driving controlling unit 114 generates a control signal which controls vertical rotation of the vertical rotating unit 104. This control signal is sent to a driving circuit (not shown in the figures) which drives a motor (not shown in the figures) which vertically rotates the vertical rotating unit 104. According to the vertical rotation driving controlling unit 114, vertical rotation of the vertical rotating unit 104 can be controlled.

The horizontal rotation driving controlling unit 115 generates control signal which controls horizontal rotation of the horizontal rotating unit 103. This control signal is sent to a driving circuit (not shown in the figures) which drives a motor (not shown in the figures) which horizontally rotates the horizontal rotating unit 103. According to the horizontal rotation driving controlling unit 115, horizontal rotation of the horizontal rotating unit 103 can be controlled.

The vertical rotation angle detecting unit 116 detects vertical rotation angle of the vertical rotating unit 104. The detection of vertical rotation angle is performed by a rotary encoder. Output of the rotary encoder is processed by the vertical rotation angle detecting unit 116 so as to measure vertical rotation angle of the vertical rotating unit 104. The horizontal rotation angle detecting unit 117 detects horizontal rotation angle of the horizontal rotating unit 103. The detection of horizontal rotation angle is performed by the rotary encoder. Output of the rotary encoder is processed by the horizontal rotation angle detecting unit 117 so as to measure horizontal rotation angle of the horizontal rotating unit 103.

The optical axis direction correction data obtaining unit 118 obtains laser scanning data of the marking for optical axis correction 106 as data for correcting error in the optical axis of scanning light.

The optical axis direction error calculating unit 119 calculates error in scanning light in an optical axis direction based on laser scanning data of the marking for optical axis correction 106 which is obtained by the optical axis direction correction data obtaining unit 118.

Hereinafter, one embodiment of processing to calculate error in the optical axis of the scanning light is explained. It should be noted that in the following explanation, it is assumed that there are no errors other than Δθx and Δθy mentioned below. Actually, there may be cases including one or more other errors, and such cases will be explained in the second embodiment.

The upper surface of the horizontal rotating unit 103, which is a part directly beneath the reflection mirror 105 is made a horizontal surface, and the marking for optical axis correction 106 is arranged thereon. The marking for optical axis correction 106 is a printed marking, or consists of a sealed or thin plate member. In this embodiment, the marking for optical axis correction 106 is a diagram of an equilateral triangle or an isosceles triangle, and laser scanning is set to be performed along a direction parallel to the base of the triangle. In addition, scanning light is set to pass near a midpoint of the triangle (a scanning line is set to pass near the midpoint of the triangle).

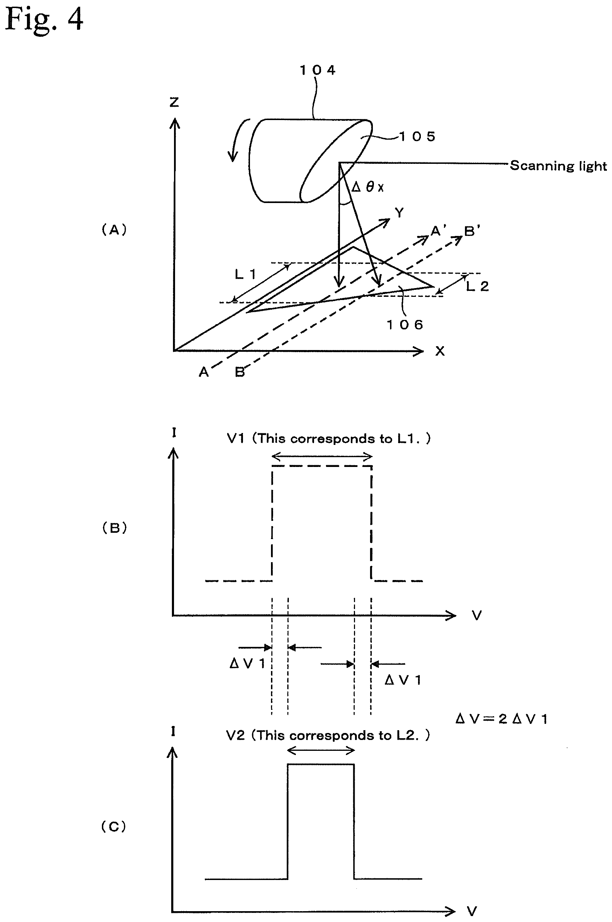

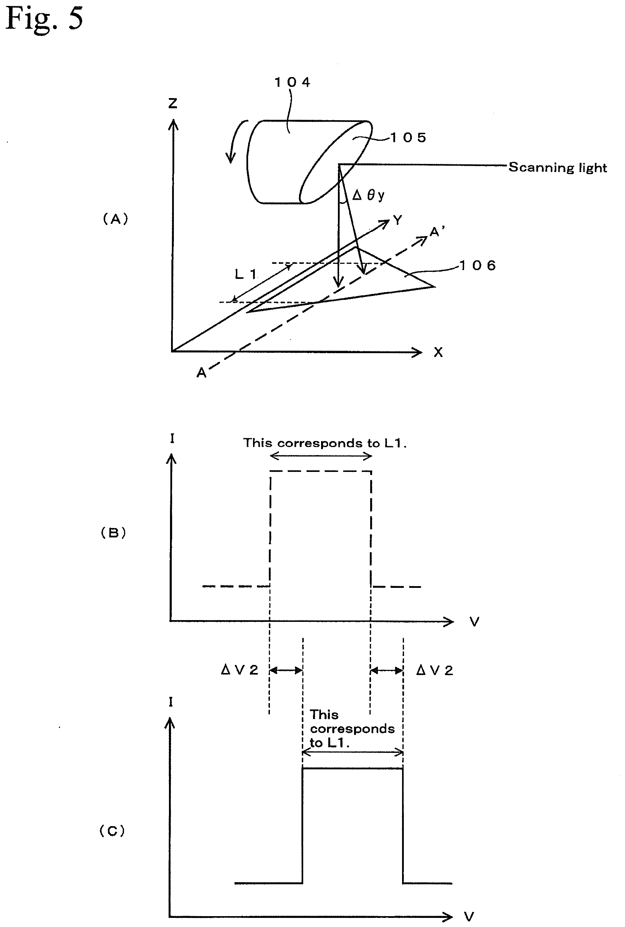

Fig. 4A is a conceptual diagram in which parts of the reflection mirror 105 and the marking for optical axis correction 106 are enlarged. In Fig. 4A, a situation is shown in which scanning light is output from the right head unit 103b of the horizontal rotating unit 103 in Fig. 1 toward the negative direction of the X axis, and the scanning light is reflected toward a direction of the marking for optical axis correction 106 (lower direction) by the reflection mirror 105. Fig. 5A shows the same.

Fig. 4A shows a scanning line A-A', which is a case in which there is no error along an optical axis direction of the scanning light. The scanning line A-A' is parallel to the base of the marking for optical axis correction 106 (parallel to the Y axis) and passes near the midpoint of the marking for optical axis correction 106. Under conditions in which pulse-like scanning light reaches the reflection mirror 105 continuously and repeatedly, by rotating the vertical rotating unit 104, scanning points are formed dot by dot along the scanning line A-A'.

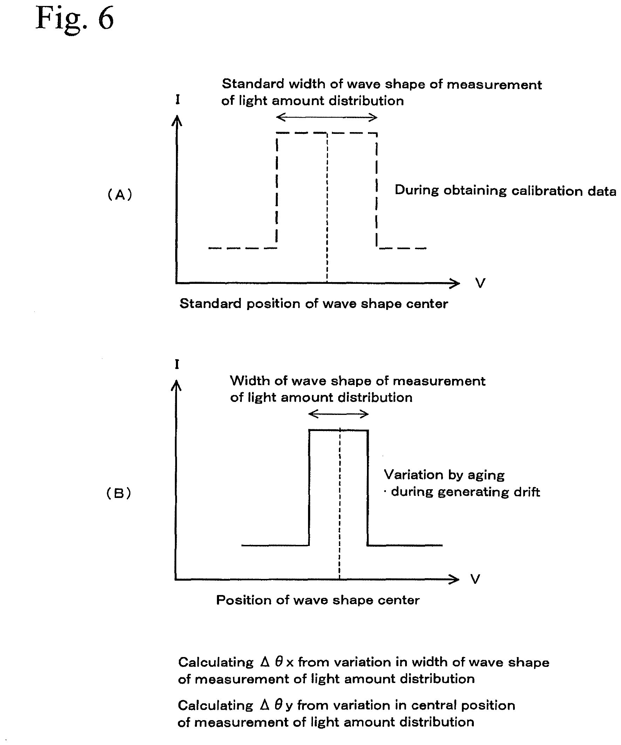

Fig. 4B shows the relationship in this case between intensity I of reflected light of scanning light which is detected (vertical axis) and vertical rotation angle V of the vertical rotating unit 104 (rotating angle around X axis) (horizontal axis). Fig. 4B shows a wave shape which is formed by an envelope curve connecting positions of peaks of the pulse-like detected light (reflected light of scanning light). This wave shape corresponds to a wave shape of measurement of the light amount distribution of the laser scanning light with respect to the marking for optical axis correction 106. Figs. 5 and 6 show the same.

Here, a case is shown in which reflected light from the marking for optical axis correction 106 is detected at relatively high intensity compared to another location. The vertical rotating angle V is a measured value showing direction of scanning light with respect to the reflection mirror 105, and is measured by the vertical rotating angle detecting unit 116. The vertical rotating angle V in this case is an angle of an elevation angle or a depression angle of scanning light. The vertical rotating angle V can also be understood as a parameter of time. Width V1 of the rectangular wave shape in Fig. 4B corresponds to length L1 of width of the marking for optical axis correction 106 in the scanning line A-A'.

The wave shape shown in Fig. 4B is a case in which optical axis of scanning light reflected by the reflection mirror 105 does not have error Δθx in the X axis direction. If Δθx is 0, under conditions in which the optical axis of the reflection surface of the reflection mirror 105 (axis perpendicular to mirror surface) is in the X-Z plane, the optical axis of scanning light reflected by the reflection mirror 105 corresponds to the vertical axis (Z axis).

Here, under conditions in which the optical axis of the reflecting surface of the reflection mirror 105 is in the X-Z plane, it is assumed that the optical axis of the scanning light reflected by the reflection mirror 105 is misaligned in the Δθx to the X axis direction, not to the Z axis direction. The Δθx may be an error of the optical axis in the direction perpendicular to the scanning direction. This misalignment may be generated due to various factors, and be due to heat.

If the misalignment of Δθx (Δθx > 0) is generated, the scanning line which passes the marking for optical axis correction 106 may be on a line B-B'. Fig. 4C shows the relationship in this case between intensity I of reflected light of scanning light which is detected and vertical rotating angle V of the vertical rotating unit 104. Width V2 of the rectangular wave shape in Fig. 4C corresponds to length L2 of the width of the marking for optical axis correction 106 in the scanning line B-B'.

As is obvious from comparing Fig. 4B and Fig. 4C, if misalignment Δθx is generated in the optical axis of scanning light in the X-Z plane, the measured value of the width of the marking for optical axis correction 106 by laser scanning may be varied from V1 to V2 (V1 > V2). It should be noted that if error is generated in the negative direction in the X axis, the difference may be V2 > V1. Here, the difference between V1 and V2 is defined as ΔV.

If Δθx is generated as explained above, variation ΔV is also generated in the width of the wave shape in measurement of the light amount distribution of laser scanning light with respect to the marking for optical axis correction 106. In the case of Fig. 4, Δθx may also be increased as ΔV is increased. It should be noted that in a case in which the marking for optical axis correction 106 is arranged in which orientation is the reciprocal at 180° in the X axis direction, this relationship may be the opposite. In any case, there is a correlation between ΔV and Δθx. Therefore, by obtaining the correlation preliminarily, Δθx can be calculated based on a measured value of ΔV.

That is, during operation (after start up) of the laser scanning apparatus 100, Δθx can be calculated by measuring ΔV based on laser scan data of the marking for optical axis correction 106 and by referring to the correlation between Δθx and ΔV obtained preliminarily. After obtaining Δθx, considering it, data of the direction of the scanning light seen from the laser scanning apparatus 100 corresponding to Δθx is corrected. In this way, error in point cloud data due to Δθx can be corrected.

According to actual measured data, Δθx is generated maximally after several tens of seconds. According to the above-mentioned method, this error can be reduced. It should be noted that Δθx may be increased gradually after start-up of the laser scanning apparatus 100 and may vary. Behavior of variation in Δθx is influenced by operation conditions.

Next, a case is explained in which angular error Δθy of the optical axis of the scanning light along the direction perpendicular to Δθx is generated. Δθy is the error in the Y axis direction (scanning direction) of the optical axis of the scanning light reflected by the reflection mirror 105. Fig. 5A shows a scanning line A-A'. The scanning line A-A' is parallel to the base of the marking for optical axis correction 106 and passes near the midpoint thereof.

Fig. 5B shows the relationship in this case between intensity I (vertical axis) of reflected light of the scanning light which is detected and the vertical rotating angle V (rotating angle around X axis) (horizontal axis) of the vertical rotating unit 104. Fig. 5B shows a case in which Δθy = 0. Width of the rectangular wave shape in Fig. 5B corresponds to length L1 of the width of the marking for optical axis correction 106 in the scanning line A-A'.

Here, it is assumed that the optical axis of scanning light reflected by the reflection mirror 105 is misaligned by Δθy to the Y axis direction. This misalignment may be generated due to various factors, and due to heat. It should be noted that Δθy concerns measurement error of the V angle (vertical angle (elevation angle, depression angle)) in a zenith-nadir direction and concerns measurement error of the horizontal angle near the horizontal plane. Δθx concerns the opposite of these.

If the misalignment of Δθy is generated, a scanning line which passes the marking for optical axis correction 106 may be on the line A-A' in Fig.5; however, there may be misalignment corresponding to Δθy in the angular position of scanning light scanning the marking for optical axis correction 106. Therefore, wave shape (wave shape of measurement of the light amount distribution of laser scanning light with respect to the marking for optical axis correction 106) showing the relationship between intensity I (vertical axis) of reflected light and vertical rotating angle V (rotating angle around X axis) (horizontal axis) of the vertical rotating unit 104 is like in Fig. 5C.

That is, compared to the wave shape of Fig. 5B in which there is no misalignment in Δθy, in the wave shape of Fig. 5C, although the width on the time axis is as the same as that in Fig. 5B, there may be misalignment of time difference ΔV2 corresponding to Δθy. It should be noted that if Δθy is generated toward a direction opposite to the case shown, the relationship of the position of the wave shape in the horizontal direction in Fig. 5A and Fig. 5B is the opposite.

That is, by generating the misalignment ΔV2, the center position (center position in the horizontal axis (angular direction)) of the wave shape of the measurement of the light amount distribution of the laser scanning light with respect to the marking for optical axis correction 106 may be misaligned. This misalignment correlates to Δθy.

In the above case, Δθy is also increased as ΔV2 is increased. Therefore, this correlation is preliminarily obtained, ΔV2 is measured during operation of the laser scanning apparatus 100, and the measured value is referred to the correlation, so that Δθy can be calculated.

In practice, there may be a case in which Δθx and Δθy are generated at the same time. In this case, it is necessary to obtain Δθx and Δθy separately. Hereinafter, this method is explained.

In this case, in an environment which can be regarded as Δθx = Δθy = 0, the wave shape of the measurement of the light amount distribution of laser scanning light with respect to the marking for optical axis correction 106 is obtained as a standard wave shape (Fig. 6A) preliminarily, and the width value and the center position of this standard wave shape are obtained. This value can be a value which is calculated from planed value.

Then, during operation of the laser scanning apparatus 100, wave shape (Fig. 6B) of the measurement of the light amount distribution of the laser scanning with respect to the marking for optical axis correction 106 is measured, and this wave shape and the above standard wave shape were compared. Then, the amount of variation in width of the measured wave shape with respect to width of the standard wave shape and the amount of variation in the center position of the measured wave shape with respect to the center position of the standard wave shape are obtained. Then, by the above-mentioned method, Δθx is calculated from the amount of variation in width of the wave shape, and Δθy is calculated from the amount of variation in the center position of the wave shape.

The above-mentioned processing to obtain Δθx and Δθy is performed in the optical axis direction error calculating unit 119.

The optical axis direction correcting unit 120 corrects the optical axis direction of each scanning light in the laser scan data of the measured object, based on the above-mentioned Δθx and Δθy which are calculated in the optical axis direction correction data analyzing unit 119.

The point cloud generating unit 121 calculates coordinates of each scanning point based on information of the direction of the optical axis of scanning light which is corrected as above and the distance to the scanning point, and generates point cloud data which is aggregation of position information of each scanning point. That is, the direction of the optical axis of the scanning light with respect to each scanning point is corrected using Δθx and Δθy obtained in the optical axis direction correction data analyzing unit 119, and based on this corrected direction of optical axis and distance to scanning point, the position of each scanning point with respect to the laser scanning apparatus 100 is calculated. As an embodiment of the point cloud, an embodiment in which a list of direction and distance of each point from the laser scanning apparatus is obtained, and an embodiment in which the three-dimensional coordinates of each point in an appropriate coordinate system are calculated, and the list thereof is obtained, may be mentioned.

The laser scanning apparatus 100 includes a communication interface and an operation panel (not shown in the figure). Explanation thereof is omitted since this is a typical installation.

### (Embodiment of processing)

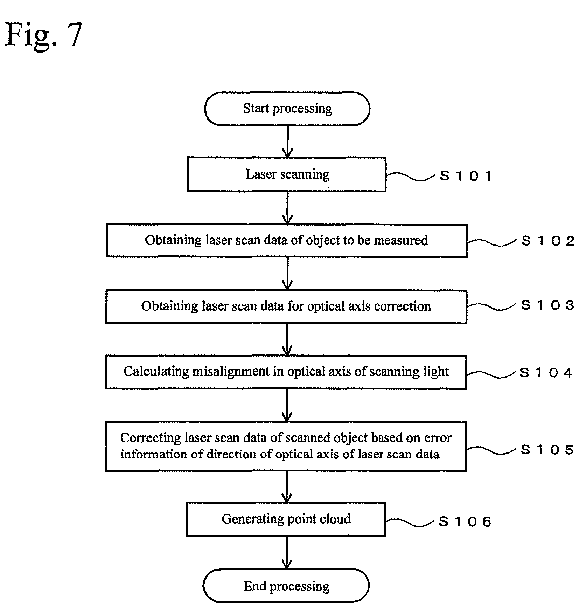

Fig. 7 is a flowchart diagram showing one embodiment of steps for processing which is performed in the laser scanning apparatus 100. The processing shown in Fig. 7 is executed by a computer installed in the laser scanning apparatus 100. A program executing the processing of Fig. 7 is stored in a storing device of the computer. An embodiment is also possible in which the program is stored in an appropriate storage medium and is downloaded therefrom.

Before the processing, the laser scanning apparatus 100 is arranged in an environment in which laser scanning is performed. Position and orientation of the laser scanning apparatus 100 can be determined beforehand, or can be calculated by a backward intersection method after laser scanning using a standard target arranged within a range of scanning.

Furthermore, calibration processes are performed beforehand so as to obtain data of Figs. 4B, 5B, and 6A, and the data is stored in a storing unit inside the laser scanning apparatus 100 or in an appropriate storage region. It should be noted that an embodiment may be mentioned in which laser scanning for calibration is performed at the start-up of operation of the laser scanning apparatus 100 so as to obtain data of Figs. 4B, 5B, and 6A, and processing regarding error in the optical axis is performed using this thereafter.

After the laser scanning apparatus 100 is arranged, laser scanning is started (Step S101). By performing laser scanning, laser scan data of the measured object is obtained (Step S102), and furthermore, laser scan data regarding the markings for the optical axis correction 106 is obtained (Step S103). The laser scan data includes scanning light direction, distance to scanning point, intensity of received light of scanning light, and time of received light of scanning light.

After obtaining laser scan data, laser scanning is ended, and processing of Step S104 and thereafter are performed. In the Step S104, based on laser scan data regarding the marking for the optical axis correction 106, misalignment (Δθx in Fig. 4 and Δθy in Fig. 5) of the optical axis of the scanning light is calculated. This processing is performed in the optical axis direction error calculating unit 119.

The above-mentioned calculation of misalignment in the optical axis is performed once per 5 seconds to 20 seconds. This processing can be performed at higher frequency; however, this may overload the processing. On the other hand, if it is performed at lower frequency, gaps between obtained correction data for optical axis of scanning light may be coarse, and accuracy of correction may deteriorate.

After obtaining information of misalignment of the optical axis of the scanning light, the gap of calculation of the misalignment is set as T (5 seconds to 20 seconds in this embodiment), the optical axis direction of scanning light in the laser scan data of the measured object is corrected in a range of T/2 before and after obtaining time of center of scan data used in calculation of the misalignment (Step S105). This processing is performed in the optical axis direction correcting unit 120.

After the Step S105, the point cloud is made based on laser scan data in which data regarding the optical axis direction of each scanning point is corrected (Step S106). This processing is performed in the point cloud generating unit 121.

### (Conclusion)

The laser scanning apparatus 100 includes the reflection mirror 105 being an optical system rotating and emitting laser scanning light; the horizontal rotating unit 103 being a housing holding the reflection mirror 105 in a rotatable condition; and the optical axis direction error calculating unit 119 being an error calculating unit calculating error of the laser scanning light in its optical axis direction, and in the laser scanning apparatus, the marking for optical axis correction 106 is a diagram arranged on the horizontal rotating unit 103, and is a diagram onto which laser scanning is performed by the laser scanning light, the marking for optical axis correction 106 has a shape (a triangle in this embodiment) of which the size in a direction parallel to the laser scanning direction is not constant along the X axis (direction perpendicular to the laser scanning direction), and the error is calculated based on laser scan data of the marking for the optical axis correction 106.

In particular, in the present embodiment, variation in error in the direction perpendicular to the scanning direction is detected based on variation in width (width of the marking in a range of scanning) along the scanning direction of the scan data of the marking for optical axis correction 106, and variation in error in the scanning direction is detected based on variation in position (variation in canter position) of the marking in a range of scanning. According to this construction, error in the optical axis of the scanning light can be calculated based on laser scan data of the marking for optical axis correction 106, and by calculating positions of the scanning points while considering this error, error in the point cloud due to the above error can be reduced.

### (Other matters)

The marking for optical axis correction 106 is an optical surface which has a certain shape having a reflection ratio different from that at the circumference thereof and which is deliberately arranged for that purpose for the shape to be read by laser scanning. In the above embodiment, the marking for optical axis correction 106 is set to have a relatively high reflection ratio, and the circumference thereof is set to be a relatively low reflection ratio, so that scanning light reflected from the marking for optical axis correction 106 can be identified in laser scanning.

As an embodiment to enable identification of scanning light from the marking for optical axis correction 106 in laser scanning, an embodiment is also possible in which the marking for optical axis correction 106 are set to have a relatively low reflection ratio, and the circumference thereof is set to have a relatively high reflection ratio.

The shape of the marking for optical axis correction 106 can be a right-angle triangle or trapezoid. Furthermore, the edge that crosses the scanning line can be a curve. It is important that a diagram be selected for which the scanned range is increased or decreased according to the difference of Δθx.

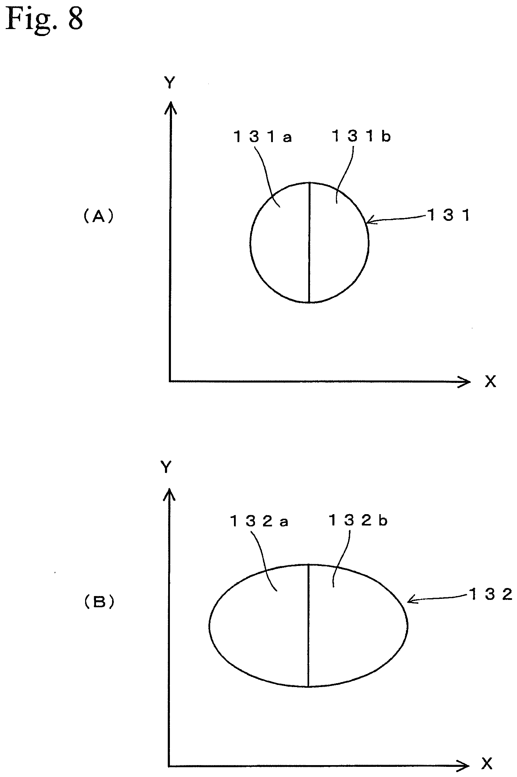

Fig. 8 shows another example of the marking for optical axis correction. Fig. 8A shows an example of a circular marking for optical axis correction 131 and Fig. 8B shows an example of elliptical marking for optical axis correction 132.

In this case, the scanning line is set to pass the center of the circle or the ellipse in a condition in which there is no error. In this example, reflection ratio in part 131a and part 131b are different from each other. Furthermore, reflection ratio in part 132a and part 132b are different from each other. According to the difference of the reflection ratio, positive or negative Δθx in the case of Fig. 4 is determined. Here, examples of a circle and an ellipse are shown, and a rhomboid and a triangle having a base extending in the X axis direction are also possible.

As the marking for optical axis correction, an embodiment is also possible in which the exemplified certain shape such as a triangle has a structure that is convex (or concave) compared to the circumference thereof, and the shape of the marking for the optical axis correction is identified by the difference in laser scan data compared to that of the circumference thereof along the height direction.

An optical system is also possible in which the vertical rotating unit 104 includes a light emitting unit and a light receiving unit. In this case, by vertically rotating the vertical rotating unit 104, the optical system including the light emitting unit and light receiving unit also rotates vertically.

An embodiment is also possible in which one, some, or all of the optical axis direction correction data obtaining unit 118, the optical axis direction error calculating unit 119, the optical axis direction correcting unit 120, and the point cloud generating unit 121 in Fig. 2, are realized by an external data processing apparatus (for example, a personal computer or a data processing server) which is prepared separately from the laser scanning apparatus 100. In this case, scan data is transmitted to the external data processing apparatus, and processing regarding one, some, or all of error calculation in optical axis direction, correction in the optical axis direction, and generation of the point cloud are performed therein.

### 2. Second embodiment

### (Summary)

In the first embodiment, the case is explained in which there is no error in orientation of the reflection mirror 105 at start-up of operation and drift components Δθx and/or Δθy is/are generated during operation.

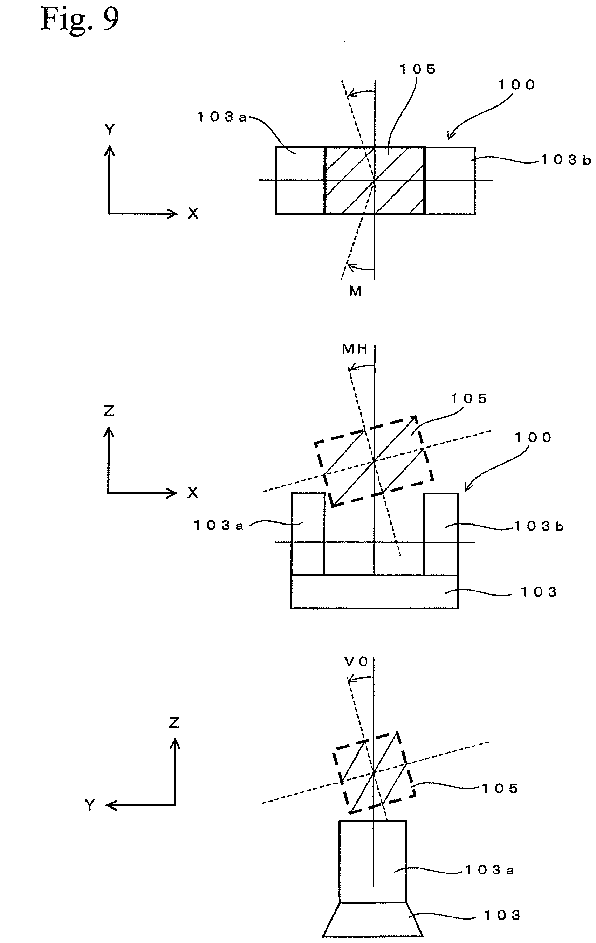

Here, in an actual product, orientation of the reflection mirror 105 may not be ideal, and there may be a case of being inclining from the ideal condition due to precision of parts, precision of assembly, and variation due to aging. This inclination of the reflection mirror 105 can be considered to be made up of three components of M, MH (M: mirror, H: horizontal axis), and V0 as shown in Fig. 9. M is misalignment from a 45° angle which is between a mirror rotation axis and a mirror surface. MH is vertical component of misalignment of horizontal axis standard of mirror rotating axis plus misalignment of mirror rotating axis standard of the optical axis. V0 is misalignment of the vertical axis standard of mirror 0 position. These three components are the error in the optical axis direction of scanning light, and therefore, they may be factors in error in laser scan data.

That is, errors in the optical axis direction of the scanning light of laser scanning apparatus 100 are M, MH, V0, Δθx, and Δθy. In order to realize greater precision, the optical axis direction of each scanning light should be corrected considering these error components.

Regarding correction of the optical axis direction of the scanning light, if the corrected amount of the Δθx direction and the Δθy direction are defined as ΔX and ΔY, respectively, there may be the relationship ΔX = MH + M +Δθx and ΔY = V0 + Δθy.

Here, M, MH, and V0 can be obtained by a normal and reverse observation which is a calibration processing performed before surveying. Hereinafter, the normal and reverse observation is explained.

In the normal and reverse observation in the present embodiment, at least two reflection targets having different heights from each other are used. For example, a first reflection target is arranged in an approximately horizontal direction with respect to the laser scanning apparatus 100, and a second reflection target is arranged at a different height from that of the first reflection target. In addition, two reflection targets are arranged apart at a distance so as to be separated for laser scanning. The separation distance from the laser scanning apparatus 100 to the two reflection targets is set to be several tens of meters.

Then, with respect to the two reflection targets, a first laser scanning (normal observation) is performed, and then, a second laser scanning (reverse observation) which is performed by horizontally rotating (reversing) the horizontal rotating unit 103 by 180° from the first condition, is performed. In this way, a pair of laser scan data, one normal and one reverse, of the first reflection target, and a pair of laser scan data, one normal and one reverse, of the second reflection target, are obtained.

Here, normal and reverse observation error is obtained. The normal and reverse observation error is the difference between two laser scan data set, one normal and one reverse, with respect to the reflection target. Here, difference between direction of the reflection prism obtained by normal observation and the direction of the reflection prism obtained by reverse observation is obtained as the normal and reverse observation error.

The normal and reverse observation error of the first reflection prism and that of the second reflection prism are obtained. M, MH, and V0 are obtained using the normal and reverse observation error data by the following method.

First, V0 is calculated by VO=(normal and reverse error of vertical angle/2). In this case, since multiple reflection targets are used, V0 is calculated by averaging multiple normal and reverse errors.

Here, the measured value of the vertical angle of each reflection target which is corrected by V0 which is calculated as above is defined as Z. In addition, using the normal and the reverse error of the horizontal angle of each reflection target, E=(normal and reverse error of horizontal angle/2) is calculated.

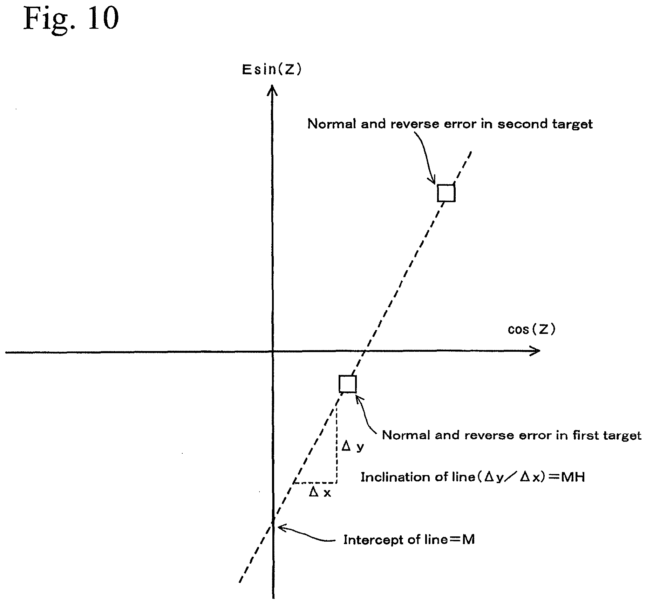

The graph of Fig. 10 is described using cos (Z) and Esin (Z) as the horizontal axis and the vertical axis, respectively. On this graph, the value of cos (Z) (horizontal axis) and the value of Esin (Z) (vertical axis) with respect to the first reflection target are plotted, and the value of cos (Z) (horizontal axis) and the value of Esin (Z) (vertical axis) with respect to the second reflection target are plotted.

Here, since the first reflection target and the second reflection target have differing heights, the location of two plotted points on the graph can be separate. Then, a line passing these two plotted points is described. If there are not fewer than three plotted points, a line fitting the distribution of the points is described. The inclination value of this line corresponds to MH, and intercept value thereof corresponds to M. In this way, M, MH, and V0 values in Fig. 9 can be calculated by the normal and reverse observations.

### (Embodiment of steps of processing)

As an assumption, in the laser scanning apparatus 100, the wave shape of the measurement of the light amount distribution of laser scanning light with respect to the marking for optical axis correction 106 is detected as explained in the first embodiment, the initial values of the width of the wave shape and center position are obtained, the above-mentioned normal and reverse observation is performed, and the initial values of the above-mentioned M, MH, and V0 are calculated during shipping a product, while performing final assembly, when maintenance is performed or the like. Furthermore, in laser scanning, it is assumed that correction of the optical axis direction of the scanning light is performed considering the above-mentioned M, MH, and V0 values.

Hereinafter an embodiment is explained in which correction is performed for the influence of drift components Δθx and Δθy and amounts of variation of ΔM, ΔMH, and ΔV0 from initial values M, MH, and V0 which are generated during operation of the laser scanning apparatus 100.

First, at a surveying site, the laser scanning apparatus 100 is set up. During the setting up, the laser scanning apparatus 100 is maintained in a horizontal position. Next, the wave shape of the measurement of the light amount distribution of laser scanning light with respect to the marking for optical axis correction 106 is detected as explained in the First Embodiment so that the amount of variation from the initial value of width of the wave shape (amount of variation in width) and the amount of variation in the center position of the wave shape (amount of variation in the center position) are calculated.

Next, by performing normal and reverse observations using the above-mentioned multiple reflection targets, M, MH, and V0 are obtained, and ΔM, ΔMH, and ΔV0 which are differences from the initial values are calculated.

Amount of variation (amount of variation in width) from the initial value of width of wave shape of measurement of light amount distribution of laser scanning light with respect to the marking for optical axis correction 106 is influenced by ΔMH. That is, there is a relationship in the amount of variation in width = ΔMH+Δθx. Furthermore, the amount of variation in the center position (center position variation amount) of the wave shape of the measurement light amount distribution is influenced by ΔV0. That is, there is a relationship of (center position variation amount) = ΔV0+Δθy.

From the above relational equations, Δθx and Δθy are calculated. Thus, ΔM, ΔMH, ΔV0, Δθx, and Δθy are obtained. These processes are performed in the optical axis direction error calculating unit in Fig. 2.

Next, laser scanning for surveying is performed so as to obtain point cloud data (laser scan point cloud). Then, with respect to optical axis of scanning light for each point of the laser scan point cloud which is obtained, corrections of ΔX = ΔMH+ΔM+Δθx, ΔY = ΔV0+Δθy are performed. This processing is performed in the optical axis direction correcting unit in Fig. 2.

During continuing operation of the laser scanning apparatus 100, drift of Δθx and Δθy may be generated accompanied by increasing temperature inside the housing of the laser scanning apparatus in the operation. This variation is obtained by the above processing which is performed at an appropriate timing, and the result is used in the correction of laser scan data (error correction).

As explained above, since error factors of ΔM, ΔMH, and ΔV0 are obtained beforehand, Δθx and Δθy, which are drift components, can be accurately determined, while accurately excluding the influence thereof.

### (Other matters)

An embodiment is also possible in which a temperature sensor is arranged inside the laser scanning apparatus 100, and Δθx and Δθy are detected based on variation in temperature which is detected by the temperature sensor. Furthermore, another embodiment is also possible in which Δθx and Δθy are always detected when laser scanning is performed, and the direction of the optical axis of the scanning light is corrected if it deviates by more than a predetermined threshold from the initial value.

### Explanation of Reference Numerals

100: Laser scanning apparatus, 101: tripod, 102: base unit, 103: horizontal rotating unit, 103a: one head unit of two-headed structure, 103b: the other head unit of two-headed structure, 104: vertical rotating unit, 105: reflection mirror, 106: marking for optical axis correction, and 107: camera.

## Claims

1. A laser scanning apparatus comprising:
an optical system emitting laser scanning light and rotating;
a housing holding the optical system in a rotatable condition; and
an error calculating unit calculating error of the laser scanning light in its optical axis direction, wherein
a diagram is arranged on the housing, a diagram onto which laser scanning is performed by the laser scanning light,
the diagram has a shape of which size in a direction parallel to the laser scanning direction is not constant, and
the error is calculated based on laser scan data of the diagram.

2. The laser scanning apparatus according to claim 1, wherein in the calculation of the error,
based on size of the diagram in scanning direction obtained by laser scanning with respect to the diagram, error Δθx in the optical axis in a direction perpendicular to the scanning direction is calculated.

3. The laser scanning apparatus according to claim 1 or 2, wherein in the calculation of the error, based on center position in scanning direction of the scan data of the diagram, error Δθy of the optical axis in the scanning direction is calculated.

4. The laser scanning apparatus according to any of claims 1 to 3, wherein in the calculation of the error,
if an error of the optical axis in a direction perpendicular to the scanning direction is defined as Δθx and an error of the optical axis in the scanning direction is defined as Δθy,
first scan data which is scan data of the diagram preliminarily obtained and second scan data which is scan data of the diagram obtained during operation of the laser scanning apparatus are compared,
the Δθx is calculated based on variation in width in scanning direction of the first scan data and the second scan data, and
the AOy is calculated based on variation in center position in scanning direction of the first scan data and the second scan data.

5. The laser scanning apparatus according to any of claims 1 to 4, wherein the apparatus further comprises an optical axis direction correcting unit correcting information regarding optical axis of scanning light, based on the error.

6. The laser scanning apparatus according to any of claims 1 to 5, wherein the error calculating unit further calculates error in optical axis direction of the laser scanning light based on result of laser scanning with respect to multiple targets, of which scanning direction is 180° different from each other in horizontal direction.

7. A processing method for laser scanning data for determining error in an optical axis in a laser scanning apparatus,
the laser scanning apparatus comprising:
an optical system emitting laser scanning light and rotating; and
a housing holding the optical system in a rotatable condition, wherein
a diagram is arranged on the housing, the diagram on which laser scanning is performed by the laser scanning light, and
the diagram has a shape of which size in a direction parallel to the laser scanning direction is not constant,
the method comprising:
calculating the error based on laser scan data of the diagram.

8. A program made to, when read and executed by a computer processor, cause the computer processor to perform processing laser scanning data for obtaining error in optical axis in a laser scanning apparatus,
the laser scanning apparatus comprising:
an optical system emitting laser scanning light and rotating; and
a housing holding the optical system in a rotatable condition, wherein
a diagram is arranged on the housing, the diagram on which laser scanning is performed by the laser scanning light, and
the diagram has a shape of which size in a direction parallel to the laser scanning direction is not constant,
the program made to, when read and executed by a computer processor, cause the computer processor to:
calculate the error based on laser scan data of the diagram.
